# EUROPÄISCHE PATENTSCHRIFT

(11) **EP 0 729 786 B1**
(45) Veröffentlichungstag und Bekanntmachung des Hinweises auf die Patenterteilung: **29.12.1999**
(21) Anmeldenummer: 96103027.7
(22) Anmeldetag: 29.02.1996
(51) Int. Cl.: B01J 23/755, C01B 17/50, B01D 53/86

(54) **Katalysator für die Oxidation von gasförmigen Schwefelverbindungen**
Catalyst for the oxidation of gaseous sulfur compounds
Catalyseur pour l'oxydation de composés gazeuse du soufre

(30) Priorität: 02.03.1995 DE 19507179
(43) Veröffentlichungstag der Anmeldung: 04.09.1996
(73) Patentinhaber: Krupp VDM GmbH, 58791 Werdohl (DE)
(72) Erfinder: Heubner, Ulrich, Dr.-Ing., 58791 Werdohl (DE); Herda, Wilfried, Dipl.-Ing., 40489 Düsseldorf (DE); Koppe, Jürgen, Dr.rer.nat., 06258 Schkopau (DE); Lausch, Hartmut, Dr.rer.nat., 06128 Halle (DE)

(56) Entgegenhaltungen:
- EP-A- 0 218 302
- EP-A- 0 565 025
- DE-A- 1 442 648
- GB-A- 1 104 562
- US-A- 3 565 574
- US-A- 4 116 884
- FRIEND, W.Z. 'Corrosion of nickel and nickel-base alloys', 1980, JOHN WILEY & SONS, NEW YORK * Seite 125 - Seite 126 *

## Beschreibung

Die Erfindung betrifft einen metallisches Nickel und Kupfer enthaltenden Katalysator für die Oxidation von gasförmigen Schwefelverbindungen, insbesondere von Schwefelwasserstoff, in sauerstoffhaltiger Atmosphäre.

Schwefelwasserstoffhaltige Gasströme fallen bei der Erdgasaufbereitung und der damit einhergehenden Entschwefelung an. Der hierbei erzeugte Schwefelwasserstoff wird in einer Claus-Anlage zu Schwefel umgesetzt. Die im Abgasstrom verbleibenden geringen Mengen an Schwefelwasserstoff, Kohlendisulfid, Kohlenoxidsulfid und Mercaptanen müssen zu Schwefeldioxid oxidiert werden, bevor das Abgas in die Atmosphäre abgeleitet wird. Hierfür bietet sich zunächst die thermische Nachverbrennung bei Temperaturen um 800 °C an. Dieses Verfahren ist jedoch energetisch sehr aufwendig. Aus diesem Grund werden seit mehr als 20 Jahren katalytische Nachverbrennungsanlagen zur Oxidation der genannten Schwefelverbindungen betrieben. Hierzu wird das Abgas in einem Brenner auf die für die Durchführung der katalytischen Reaktion erforderliche Temperatur aufgeheizt und dann in den mit einem speziellen Katalysator gefüllten Reaktor geleitet. Der Katalysator sollte dabei folgende Anforderungen erfüllen:
- vollständige Oxidation der Schwefelverbindungen zu Schwefeldioxid bei niedrigen Temperaturen;
- keine Bildung von Schwefeltrioxid;
- hohe katalytische Aktivität, ausgedrückt durch die Raumgeschwindigkeit;
- geringer Druckverlust.

Ursprünglich wurde Bauxit als katalytisch aktive Masse verwendet. Dieses Material arbeitet jedoch erst bei Temperaturen um 400 °C zufriedenstellend. Dabei tritt zugleich eine merkliche Bildung von Schwefeltrioxid auf. Später kamen Katalysatoren auf Basis von Aluminiumoxid auf den Markt. Diese konnten aber die bereits genannten Nachteile nicht merklich beheben.

Heute setzt man spezielle Nachverbrennungskatalysatoren auf keramischer Basis ein, die mit Metallsalzen der Übergangsmetalle - vor allem mit Kupferoxid und Chrom(III)-oxid - beladen sind [R. Kettner, T. Lübcke: Betrieb von KNV-Anlagen nach Clausanlagen, VDI-Berichte 730(1989)].

Ein typisches Beispiel für die Einsatzbedingungen und die katalytische Leistungsfähigkeit derartiger Katalysatoren für die Oxidation von Schwefelverbindungen wird in Tabelle 1 dargestellt:

**Tabelle 1**

| | |
|---|---|
| Gasdurchsatz | 80 000 Nm³/H |
| Arbeitstemperatur | 330 °C |
| Katalysatormenge | 45 m³ |
| Raumgeschwindigkeit | 1 780 h⁻¹ |
| Druckverlust | 20 mbar |
| Schwefelwasserstoff im Abgas | < 10 mg/m³ |
| Kohlenoxidsulfid und Kohlendisulfid im Abgas | < 80 mg/m³ |
| Schwefeltrioxid-Taupunkt | 125 °C |

Diese keramischen Katalysatoren haben folgende Nachteile:
- geringer Umsatz an Kohlenoxidsulfid (71 %) und Kohlendisulfid;
- merkliche Schwefeltrioxidbildung von etwa 10 % des Schwefeldioxids, insbesondere wenn aufgrund der Oxidation des Schwefelwasserstoffs die Temperatur im Katalysatorbett auf etwa 400 °C ansteigt;
- relativ geringe katalytische Aktivität, ausgedrückt durch die Raumgeschwindigkeit;
- relativ hoher Druckverlust;
- komplizierte Aufarbeitung verbrauchter Katalysatoren.

Der EP-A 0 565 025 ist ein Verfahren zur Herstellung von Brenngas für Brennstoffzellen zu entnehmen, beinhaltend die hydrierende Behandlung von Schwefel enthaltenden Kohlenwasserstoffverbindungen in Gegenwart von Wasserstoff und mit einem Entschwefelungsmittel, welches eine Kupfer-Nickel-Legierung enthält, die ein Kupfer: Nickel-Gewichtsverhältnis von 95 : 5 bis 5 : 95 aufweist.
Zum Einsatz gelangt hierbei u. a. ein Trägerkatalysator, bestehend aus Zink- und Aluminiumnitrat sowie Natriumkarbonat in vorgebbaren Mischungsverhältnissen. Durch umfangreiche chemische Reaktionen in Verbindung mit thermischen Behandlungen sowie Zerkleinerungsschritten wird der angesprochene Trägerkatalysator gewonnen. Das Gewichtsverhältnis stellt sich u. a. so ein, daß einerseits (in Gew.-%) ein Kupferanteil von 22 %, ein Nickelanteil von 21 %, ein ZnO-Anteil von 46 % und ein Al₂O₃-Anteil von 11 % erreicht wird. Andererseits soll (in Gew.-%) ein Kupferanteil von 10 %, ein Nickelgehalt von 30 %, ein ZnO-Anteil von 50 % und ein Al₂O₃-Gehalt von 10 % gegeben sein.

Durch die US-A 4,116,884 ist ein Katalysatorsystem zur Oxidation von Kohlenmonoxid und kohlenwasserstoffhaltigen Gasen bekannt. Der Katalysator soll (in Gew.-%) etwa 45 bis 70 % Nickel, 30 bis 55 % Co sowie 0,5 bis 10 % Cr enthalten. Alternativ wird ein Katalysator vorgeschlagen, der folgende Legierungselemente (in Gew.-%) enthält: 25 bis 75 % Ni, 25 bis 60 % Co sowie ≤ 50 % Cu.
Zum Stand der Technik wird bei dieser Druckschrift u. a. auf die US-A 3,565,574 verwiesen, die (in Gew.-%) 66 % Ni sowie 31,5 % Cu und Verunreinigungen enthalten soll. Die Wirksamkeit dieses Katalysators wird als sehr gering (15 bis 20 % bei 600 °C) angegeben.

Der US-A 3,565,574 ist ein Verfahren zur Reduzierung des NOₓ-Gehaltes eines brennstoffreichen Abgasstromes für eine Brennkraftmaschine zu entnehmen, wobei als Katalysator eine trägerfreie Kupfer-Nickellegierung Verwendung finden soll, die im Betriebszustand bei einer Temperatur oberhalb 800 °F (entsprechend 427 °C) einsetzbar ist. Eine bevorzugte Legierung wird im Monelmetall gesehen. In einer weiteren nachgeschalteten Stufe sollen unter Zusatz von Sauerstoff oder Luft Kohlenmonoxid und unverbrannte Kohlenwasserstoffe katalytisch oxidiert werden können, dies jedoch erst bei Betriebstemperaturen > 1 200 °F (649 °C).

Die Aufgabe der Erfindung besteht darin, eine Legierungszusammensetzung für einen leistungsfähigen und leicht zu entsorgenden Katalysator zur Oxidation von Schwefelverbindungen bereitzustellen, der insbesondere einen geringen Druckabfall im Katalysatorbett verursacht sowie einen hohen Umsatz an Kohlenoxidsulfid bewirkt bei gleichzeitig minimierter Schwefeltrioxidbildung.

Die Aufgabe wird erfindungsgemäß durch die kennzeichnenden Merkmale des ersten Patentanspruchs gelöst.

Vorteilhafte Weiterbildungen des Erfindungsgegenstandes sind den Unteransprüchen zu entnehmen.

Gute Ergebnisse werden auch erzielt mit einem Katalysator aus einer Nickellegierung mit 30 bis 35 Masse-% Kupfer, 1 bis 2,5 Masse-% Eisen, max. 1,25 Masse-% Mangan, max. 0,5 Masse-% Aluminium, max. 0,2 Masse-% Titan und max. 0,15 Masse-% Kohlenstoff, Rest Nickel.

Besonders vorteilhaft ist dabei der Einsatz des Katalysatormaterials in Form von dünnen Drähten mit Durchmessern im Bereich von 0,05 bis 0,30 mm. Diese Drähte werden zu Drahtgestricken verarbeitet und der angegebenen thermischen Behandlung unterworfen.

Überraschenderweise zeigt der Katalysator im Arbeitsbereich von 300 bis 450 °C keine nachweisbare Bildung von Schwefeltrioxid.

Der Umsatz des Kohlenoxidsulfids zu Kohlendioxid und Schwefeldioxid beträgt in Gegenwart hinreichender Mengen Wasserdampf - d.h. im Bereich von 5 bis 15 Vol.-% Wasserdampf im Reaktionsglas - über 85 %.

Der Katalysator entfernt bei Raumgeschwindigkeiten im Bereich zwischen 5.000 und 10.000 h⁻¹ Schwefelwasserstoff bis unterhalb der Nachweisgrenze.

Der Katalysator arbeitet bereits schon bei Temperaturen um 300 °C zufriedenstellend.

Im Vergleich zu herkömmlichen Katalysatoren sinkt der Druckverlust im Katalysatorbett auf 1/5 bis 1/10 ab. Ein gealteter erfindungsgemäßer Katalysator mit einer verminderten katalytischen Aktivität kann durch eine thermische Behandlung des Katalysators im Temperaturbereich von 400 bis 1.000 °C für eine Zeit von 0,25 bis 5 Stunden regeneriert werden.

Ein verbrauchter erfindungsgemäßer Katalysator kann eingeschmolzen und zu einer Legierung und/oder erneut zu Katalysatorvormaterial verarbeitet werden.

Die Erfindung wird durch nachfolgende Beispiele näher erläutert.

### Beispiel 1

Die Katalysatoren wurden aus den in Tabelle 2 aufgeführten Metallegierungen hergestellt. Die Legierungen wurden in Form von Draht mit einem Durchmesser von 0,28 mm eingesetzt. Dieser Draht wurde zu Drahtformkörpern mit einem Durchmesser von 20 mm und einer Formkörperlänge von 25 mm verstrickt, wobei die Dichte der fertigen Drahtformkörper 0,6 g/cm³ betrug.

Diese Drahtformkörper wurden unter den in Tabelle 2 genannten Bedingungen unter Luftatmosphäre im Muffelofen getempert.

Jeweils 80 cm³ dieser Katalysatoren wurden in einen thermostatierten Quarzreaktor mit einem Rohrinnendurchmesser von 20 mm gegeben. Durch den Reaktor strömte unter einem geringfügigen Überdruck - resultierend aus dem Druckverlust der Versuchsanlage - ein Gasgemisch folgender Zusammensetzung:
- 325 l/h: Stickstoff
- 125 l/h: Kohlendioxid
- 60 l/h: Luft
- 0,5 l/h: Schwefelwasserstoff

Aus der Gasmenge und der Katalysatormenge ergibt sich eine Raumgeschwindigkeit von 6375 h⁻¹, die um den Faktor 3,5 über dem des Standes der Technik liegt.

Der Reaktor wurde auf 320 °C aufgeheizt und thermostatiert. Der Druckabfall im Katalysatorbett betrug unter Reaktionsbedingungen 25 mm Wassersäule.

Nach einer Formierungsphase der jeweiligen Katalysatoren von einer Stunde wurden die in Tabelle 2 angegebenen Umsätze an Schwefelwasserstoff gemessen. Die Bestimmung der Schwefelwasserstoffkonzentration im Rohgas und im Reingas erfolgte gaschromatografisch mittels Flammenionisationsdetektor, wobei die untere Nachweisgrenze bei 0,1 ppm lag. Die Rohgaskonzentration lag einheitlich bei etwa 1.000 ppm.

**Tabelle 2**

| Katalysator | Zusammensetzung | Temp. °C | Verweilzeit [h] | Umsatz H₂S [%] |
|---|---|---|---|---|
| 1 | 87 % Cu, 10 % Ni, 1,5 % Fe, 1 % Mn, 0,5 % Zn, P, S | 650 | 1 | 99,5 |
| 2 | 68 % Cu, 30 % Ni, 1 % Mn, 0,5 % Fe, 0,5 % Zn, S, P | 650 | 1 | 100 |
| 3 | wie 2 | 550 | 1,5 | 100 |
| 4 | 100 % Cu | 600 | 1,5 | 99,7 |

Bei den Katalysatoren 2 und 3 lag die Schwefelwasserstoffkonzentration am Reaktorausgang unter 0,1 ppm. Der Katalysator 1 erreicht zwar nicht die hohen Umsätze an Schwefelwasserstoff wie die Katalysatoren 2 und 3, jedoch genügen diese Umsätze, um eine Schwefelwasserstoffkonzentration am Reaktorausgang von kleiner 10 ppm zu gewährleisten. Aus diesem Grund ist dieser Katalysator noch für den technischen Einsatz geeignet.

Nach jeweils 16 Stunden Austestung zeigten die Katalysatoren keinen Abfall hinsichtlich der Aktivität.

Der Vergleichskatalysator 4 aus Reinkupfer wies im Gegensatz zu den anderen Katalysatoren deutliche korrosive Angriffe am metallischen Grundkörper auf. Dabei ist dieser Katalysator für einen dauerhaften technischen Einsatz nicht zu empfehlen.

### Beispiel 2

Unter den gleichen Bedingungen wie beim Beispiel 1 wurde in Gegenwart des Katalysators 2 in das Rohgas Kohlenoxidsulfid in einer Menge von 500 ppm zudosiert. Die Bestimmung des Kohlenoxidsulfids erfolgte gaschromatografisch mittels Flammenionisationsdetektor.

Ohne Zugabe von Wasserdampf betrug der Umsatz von Kohlenoxidsulfid etwa 30 %. Bei Zugabe von Wasser durch Einspritzen in das kalte Rohgas, wobei die Wasserdampfkonzentration im Reaktor zwischen 5 bis 15 Vol.-% lag, stieg der Umsatz an Kohlenoxidsulfid auf 88 % an. Der Umsatz an Schwefelwasserstoff blieb unvermindert bei praktisch 100 %.

Dieses Resultat zeigt, daß der Umsatz an Kohlenoxidsulfid nicht nur eine Frage des betreffenden Katalysators ist, sondern ganz wesentlich durch die Wasserdampfkonzentration im Reaktor bestimmt wird. Dabei gilt, daß der Umsatz an Kohlenoxidsulfid mit steigender Wasserdampfkonzentration zunimmt.

Da im technischen Reaktor Wasserdampfkonzentrationen im Bereich von 5 bis 15 Vol.-% vorliegen, sind mit dem erfindungsgemäßen Katalysator Umsätze an Kohlenoxidsulfid in der Größenordnung von über 85 % erreichbar. Diese Umsätze liegen deutlich über dem bisher bekannter.

Bei keinem der verwendeten Katalysatoren konnte eine mögliche Bildung von Schwefeltrioxid beobachtet werden. Beim Durchströmen des Gases durch einen Kühler sowie eine mit einer wäßrigen Lösung gefüllten Waschflasche traten keinerlei Schwefeltrioxidnebel auf.

### Beispiel 3

Katalysator 2 wurde durch Belastung mit einem sauerstoffarmen Gas, das weniger als 1 Vol.-% Sauerstoff enthielt sowie 10.000 ppm Schwefelwasserstoff, bei einer Temperatur von 250 °C künstlich so gealtert, daß seine Aktivität unter den für die Katalysatoraustestung üblichen und bereits genannten Reaktionsbedingungen auf 90 % der ursprünglichen Aktivität abfiel. Dieser Katalysator wurde anschließend 1 Stunde lang im Muffelofen bei 600 °C unter Luftatmosphäre regeneriert. Danach wurde der regenerierte Katalysator in den Reaktor eingebaut und unter den üblichen und bereits genannten Reaktionsbedingungen ausgetestet. Der Umsatz an Schwefelwasserstoff stieg wieder auf 100 % an.

## Patentansprüche

1. Metallisches Nickel und Kupfer enthaltender Katalysator für die Oxidation von gasförmigen Schwefelverbindungen, insbesondere von Schwefelwasserstoff, in sauerstoffhaltiger Atmosphäre,
**dadurch gekennzeichnet**,
daß der aus Sintermetall, Metallschaum, Drehspänen oder einem Gestrick aus Drähten bestehende Katalysator durch thermische Behandlung eines 5 bis 70 Masse-% Nickel, zusätzlich mindestens eines der Elemente Eisen, Mangan, Zink, Chrom, Aluminium, Titan, Kohlenstoff, Phosphor oder Schwefel in einer Menge von nicht mehr als insgesamt 5 Masse-% zu Lasten des 30 bis 95 Masse-% Kupfer als Rest enthaltende Metallegierung bei Temperaturen von 400 bis 1000°C in sauerstoffhaltiger Atmosphäre für eine Zeit von 0,25 bis 5h erhältlich ist.

2. Katalysator nach Anspruch 1,
**dadurch gekennzeichnet**,
daß bei Verwendung von Drähten diese mit einem Durchmesser von 0,05 bis 0,30 mm versehen sind.

3. Verwendung des Katalysators nach einem der Ansprüche 1 und 2, für die Oxidation von gasförmigen Schwefelverbindungen, insbesondere von Schwefelwasserstoff, in sauerstoffhaltiger Atmosphäre.

## Claims

1. Metallic nickel and copper containing catalyst for the oxidation of gaseous sulfur compounds, in particular of hydrogen sulphide, in oxygenous atmosphere,
characterized in that
the catalyst consisting of sintered metal, metal foam, turnings or a wire mesh is obtained by means of thermal treatment of a metal alloy containing 5 to 70 weight per cent nickel and addionally at least one of the elements iron, manganese, zinc, chromium, aluminium, titanium, carbon, phosphorus or sulfur in a ratio of no more than 5 weight per cent in total to the debit of the remaining 30 to 95 weight per cent copper at temperatures between 400 and 1000°C in oxygenous atmosphere for a period of 0.25 to 5 h.

2. Catalyst according to claim 1,
characterized in that
in the case of using wires, these ones are provided with a diameter of 0.05 to 0.30 mm.

3. Use of the catalyst according to one of the claims 1 and 2 for the oyidation of gaseous sulfur compounds, in particular of hydrogen sulphide, in oxygenous atmosphere.

## Revendications

1. Catalysateur contenant du nickel et du cuivre métalliques pour l'oxydation des composés gazeux de soufre, notamment de l'acide sulfhydrique, dans l'atmosphère oxygénée,
caractérisé en ce que
le catalysateur consistant en métal fritté, en écume de métal, en tournures ou en treillis en fil peut etre obtenu a l'aide d'un traitement thermique d'un alliage métallique contenant 5 a 70 % en poids nickel et supplémentairement au moins l'un des éléments fer, manganèse, zinc, chrome, aluminium, titane, carbone, phosphore ou soufre dans une proportion, qui n'excède pas 5 % en poids en total, à la charge des 30 à 95 % en poids du cuivre résiduaire, à des températures de 400 à 1000°C dans une atmosphère oxygénée pendant un temps de 0,25 à 5 h.

2. Catalysateur selon la revendication 1,
caractérisé en ce qu'
en utilisant des fils de fer ceux-ci sont pourvus d'un diamètre de 0,05 à 0,30 mm.

3. Utilisation du catalysateur selon l'une des revendications 1 ou 2 pour l'oxydation des composés gazeux de soufre, notamment de l'acide sulfhydrique, dans l'atmosphère oxygénée.
